# EUROPEAN PATENT SPECIFICATION

(11) **EP 2 360 425 B1**
(45) Date of publication and mention of the grant of the patent: **23.01.2013**
(21) Application number: 11001506.2
(22) Date of filing: 23.02.2011
(51) Int. Cl.: F21S 8/12, F21S 8/10, B62J 6/02, F21V 8/00, F21W 101/027

(54) **Light guiding lens and vehicle light**
Lichtleitende Linse und Fahrzeuglicht
Lentille de guidage lumineux et phare de véhicule

(30) Priority: 24.02.2010 JP 2010038277
(43) Date of publication of application: 24.08.2011
(73) Proprietor: Stanley Electric Co., Ltd., Meguro-ku Tokyo 153-8636 (JP)
(72) Inventor: Maegawa, Akihiro, Tokyo 153-8636 (JP); Shigematsu, Kenji, Tokyo 153-8636 (JP)
(74) Representative: Wagner, Karl H.

(56) References cited:
- EP-A1- 2 019 257
- DE-A1-102005 050 420
- DE-A1-102006 059 980
- DE-C1- 19 740 315
- US-A1- 2007 047 249

## Description

### Technical Field

The present invention relates to a light guiding lens and a vehicle light, and in particular, to a light guiding lens that can enhance the illumination effect without a dedicated light source for a light guiding member or the like as well as to a vehicle light such as a vehicle headlight utilizing such a light guiding lens.

### Background Art

Conventional light guiding lenses to be mounted in a vehicle headlight have been known to capture leakage light beams from a light source other than light beams for forming a main light distribution pattern without a dedicated light source for such a light guiding lens. Such light guiding lenses can utilize the leakage light beams to achieve sufficient illumination effects. (See, for example, Japanese Patent Application Laid-Open No. 2009-32564 (or EP 2019257A1)).

Such conventional light guiding lenses have been typically formed to have a curved section(s) where propagating light beams may pass out (or leak), thereby preventing the light beams from being propagated to the areas after the curved section. In order to cope with such a problem, the design of such conventional light guiding lenses may be restricted to exclude a sharp corner and the like section.

DE 197 40 315 C1 discloses a vehicle light including a light conductor system which is bent in a perpendicular direction (forward) toward a light outlet surface. However, there is no description where a curved section is provided. Furthermore, there is no disclosure relating to a plurality of cut surfaces like the present invention.

US 2007/047246 A1 discloses a lighting unit for vehicle including a light guiding body. The light guiding body is formed in a substantially L-shaped cross section and includes an upper end section of a vertical section projecting inwards in a housing and an output surface at the other end. However, there are no cut surfaces formed along the peripheral direction of a curved section.

DE 10 2006 059980 A1 discloses a light guiding member provided with a plurality of cut portions in a surface structure. However, the cut portions are not formed to extend along the thickness direction of the curved section like the present invention, and also not formed in accordance with the radius of curvature of the curved section. This means the simple cut portions of this patent publication are provided without any specific design like the present invention. Accordingly, this configuration cannot solve the problems like the present invention and cannot achieve the purposes of the present invention.

### Summary

The present invention was devised in view of these and other problems and features and in association with the conventional art. According to an aspect of the present invention, a light guiding lens can be provided to increase the amount of light beams that can be properly propagated through corner sections and the following sections of the light guiding member as well as the design degree of freedom.

According to the present invention, a light guiding lens is provided as set forth in claim 1.

The present invention also provides for a vehicle light as set forth in claim 2.

In the above configuration, the vehicle light may be a vehicle headlight, a vehicle fog lamp, a vehicle auxiliary headlight, a signal light, a turning light, a tail light, and the like.

In the abovementioned light guiding lens, since the cut surface is be formed on the outer peripheral surface of the curved section with the cut surface being capable of reflecting the light beams reflected by the reflecting inner surface toward the extension section by internal reflection, the light beams passing out can be reflected by the cut surface toward the extension section. Accordingly, the light guiding lens can increase the amount of light beams that can be properly propagated through the corner section and the following section of the light guiding lens as well as the design degree of freedom.

In the abovementioned light guiding lens, the cut surface extends along the thickness direction of the curved section. Furthermore, the cut surface is composed of a plurality of cut surfaces arranged along the peripheral direction of the curved section. The cut surfaces are be designed in accordance with the radius of curvature of the curved section. This configuration can effectively reflect light beams entering there toward the extension section.

### Brief Description of Drawings

These and other characteristics, features, and advantages of the present invention will become clear from the following description with reference to the accompanying drawings, wherein:
Fig. 1 is a perspective view illustrating the entire configuration of a vehicle headlight according to one embodiment of the present invention;
Fig. 2 is a front view illustrating the schematic configuration of a light guiding lens to be installed in the vehicle headlight of Fig. 1;
Fig. 3 is a rear view illustrating the schematic configuration of the light guiding lens of Fig. 2;
Fig. 4 is a side view illustrating the schematic configuration of the light guiding lens of Fig. 2;
Fig. 5 is a top view illustrating the schematic configuration of the light guiding lens of Fig. 2;
Fig. 6 is an enlarged partial view showing the schematic configuration of the light guiding lens in which cut surfaces are shown;
Fig. 7 is a simulation diagram showing the results of ray tracing performed on the light guiding lens of Fig. 2; and
Fig. 8 is a simulation diagram showing the results of ray tracing performed on a comparative example of a light guiding lens without cut surfaces formed thereon.

### Description of Exemplary Embodiments

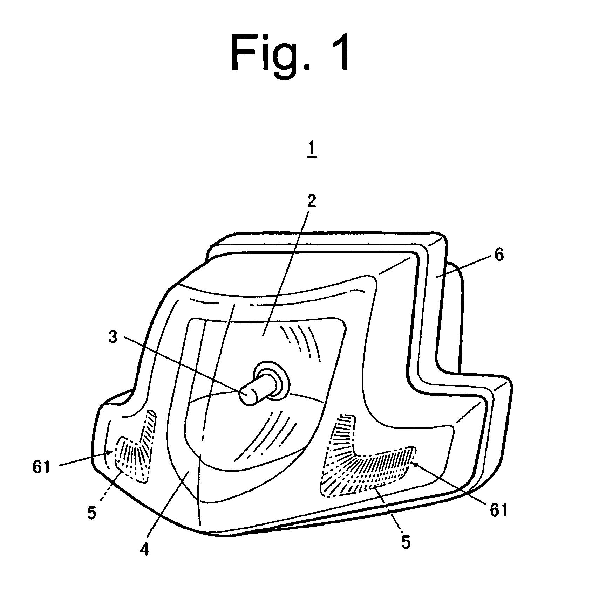

A description will now be made below to a light guiding lens and a vehicle headlight of the present invention with reference to the accompanying drawings in accordance with exemplary embodiments. Fig. 1 is a perspective view illustrating the entire configuration of a vehicle headlight according to one embodiment of the present invention.

It should be noted that, in the present specification "vertical " "horizontal," "above," "below," "front," "rear," "left," and "right" refer to the "vertical," "horizontal," "above," "below," "front," "rear," "left," and "right," respectively, of a vehicle equipped with a headlight.

The vehicle headlight 1 can be mounted on a motorcycle, for example, and as shown in Fig. 1, can be configured to include a reflector 2, a light source 3, an outer lens 4, a light guiding lens 5, and a housing 6 that can accommodate these components.

The reflector 2 is disposed behind the light source 3 and can be configured to include as an inner surface a revolved paraboloid having a focus at or near the light source 3 so as to form a predetermined light distribution pattern in front of the motorcycle by the projected light beams.

The light source 3 can be an incandescent light bulb having a filament and fixed to the reflector 2 in position so as to allow the filament to be disposed at or near the focus of the reflector 2. The light source 3 has an optical axis which can be arranged horizontally and extend in the front direction.

The outer lens 4 can be disposed in front of the light source 3 and the reflector 2 and attached to the housing 6. In this exemplary embodiment, both right and left sides of the outer lens 4 and the housing 6 can extend laterally so as to provide respective housing portions 61 for housing the light guiding lens 5 each.

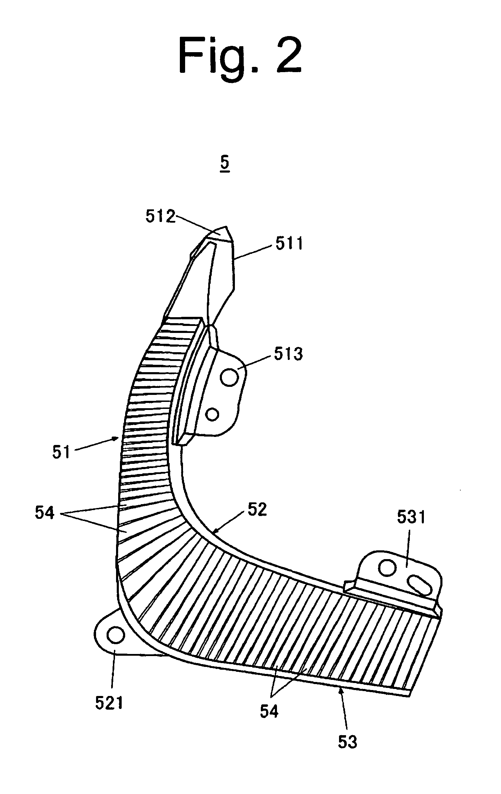

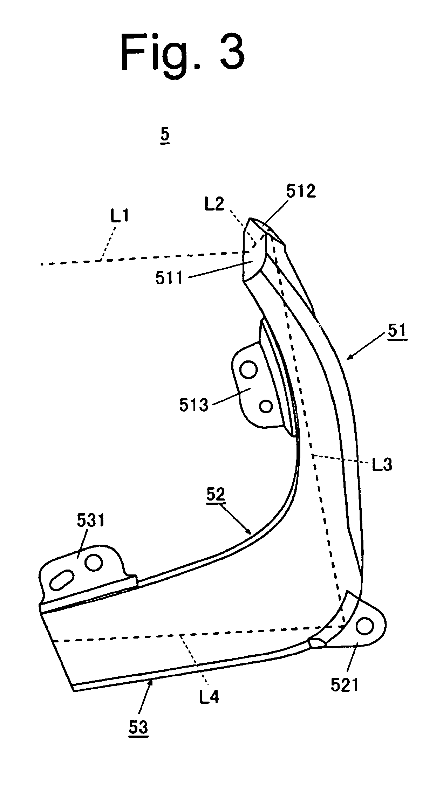

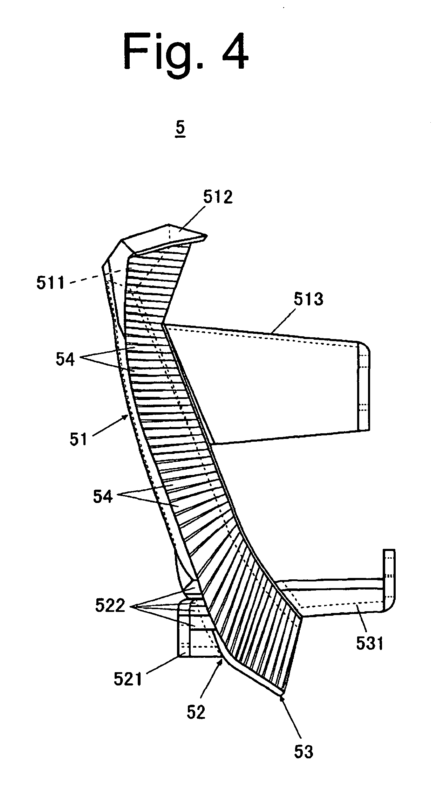

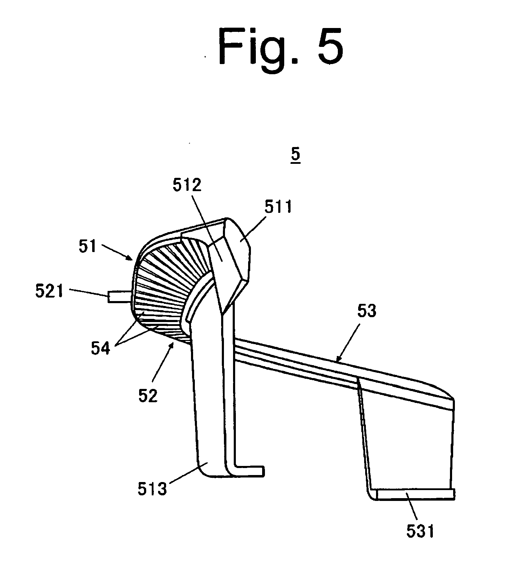

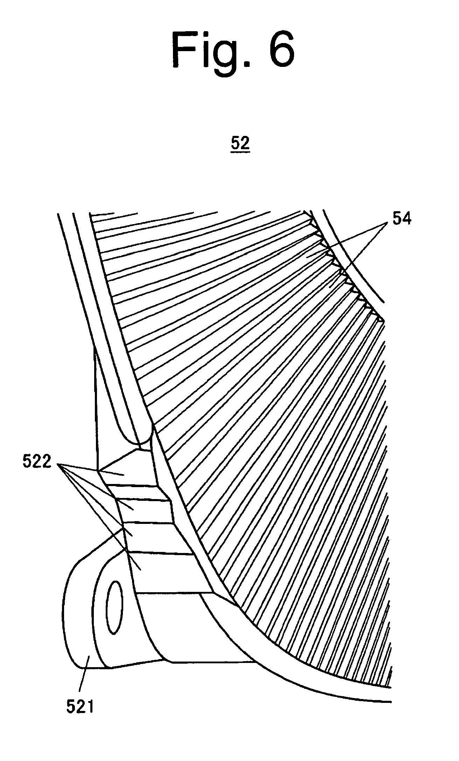

A description will now be given of the light guiding lens 5 with reference to Figs. 2 to 6. Fig. 2 is a front view of the light guiding lens 5, Fig. 3 is a rear view thereof, Fig. 4 is a side view thereof, Fig. 5 is a top view thereof, and Fig. 6 is an enlarged partial view thereof.

The light guiding lens 5 can be disposed at an area out of an optical path for the light beams emitted from the light source 3 via the reflector 2 with the light beams for forming a predetermined light distribution pattern. The light guiding lens 5 can include a lens main body 51, a curved section 52, and an extension section 53.

The lens main body 51 can be configured to extend in the vertical direction and can have a light incident surface 511 at its upper end near the light source 3. Part of the light beams reflected by the reflector 2 can impinge on the light incident surface 511 to enter the lens main body 51.

Specifically, out of the light beams emitted from the light source 3, part of the light beams is projected directly forward via an optical path to form the predetermined light distribution pattern and part of the light beams is projected rearward to be reflected by the reflector 2, thereby being directed forward via the optical path to form the predetermined light distribution pattern. In this case, part of the directly projected light beams may be forwarded out of the optical path and also part of the reflected light beams may be forwarded out of the optical path. In this configuration, these parts of the directly projected light beams and the reflected light beams out of the optical path can enter the lens main body 51 through the light incident surface 511.

The lens main body 51 can also have a light guiding reflecting inner surface 512 that can be formed on an inner surface of the lens main body 51 so as to downwardly reflect the light beams entering the lens main body 51 through the light incident surface 511 by internal reflection. Accordingly, the reflecting inner surface 512 can be disposed opposite to the inner surface of the light incident surface 511. The lens main body 51 can also have a first fixing piece 513 at one side for fixing the lens main body 51 to the housing 6.

The curved section 52 can be formed to be curved laterally from the lower end of the lens main body 51. On the outer periphery of the curved section 52, a second fixing piece 521 can be provided for fixing the curved section 52 to the housing 6. Furthermore, as shown in Fig. 6, a plurality of cut surfaces 522 can be formed on an outer peripheral surface of the curved section 52 so that the cut surfaces 522 can reflect the light beams that have been reflected by the light guiding reflecting surface 512 and passed through the lens main body 51 and the curved section 52 toward the extension section 53 by internal reflection. The cut surfaces 522 extend along a thickness direction of the curved section 52. Furthermore, the cut surfaces 522 are be arranged along the peripheral direction of the curved section 52. The cut surfaces 522 can be formed to be inclined by certain respective angles in accordance with, for example, the radius of curvature of the curved section 52 so as to be capable of achieve internal reflection of the light beams toward the extension portion 53.

The extension portion 53 can extend from the end of the curved section 52 in a direction substantially perpendicular to the extending direction of the lens main body 51. A third fixing piece 531 can be formed at the upper end of the extension section 53 for fixing the extension section 53 to the housing 6.

It should be noted that a number of grooves 54 can be formed over the surface of the lens main body 51, the curved section 52, and the extension section 53 in a radial direction. These grooves 54 can enhance the illumination effect by diffusing the light beams passing through the light guiding lens 5 from inside to the front side.

Next, a description will be given of the action of the present exemplary embodiment.

When the light source 3 emits light beams, almost all the light beams are directly or indirectly (reflected by the reflector 2) projected through the outer lens 4 to illuminate a front road surface by the predetermined light intensity distribution. In this case, part of the light beams out of the optical path for the light beams for forming the predetermined light intensity distribution can reach the light incident surface 511 of the light guiding lens 5 to enter the lens main body 51 (see the dotted lines L1 and L2 in Fig. 3). Part of the light beams entering through the light incident surface 511 can be reflected by the light guiding reflecting surface 512 by internal reflection to be directed below toward the curved section 52 (see the dotted line L3 in Fig. 3). Part of the light beams directed toward the curved section 52 and reaching the cut surfaces 522 can be reflected by the cut surfaces 522 by internal reflection to be directed toward the extension section 53 (see the dotted line L4 in Fig. 3). This results in light projection from the extension section 53.

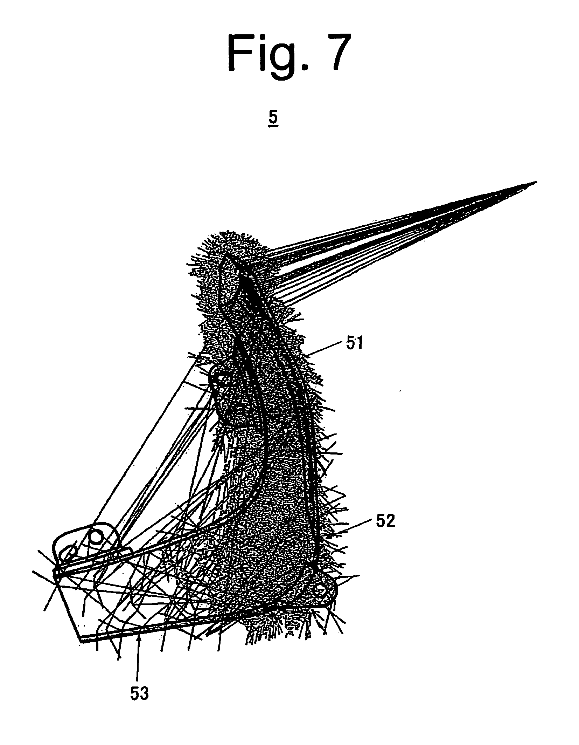

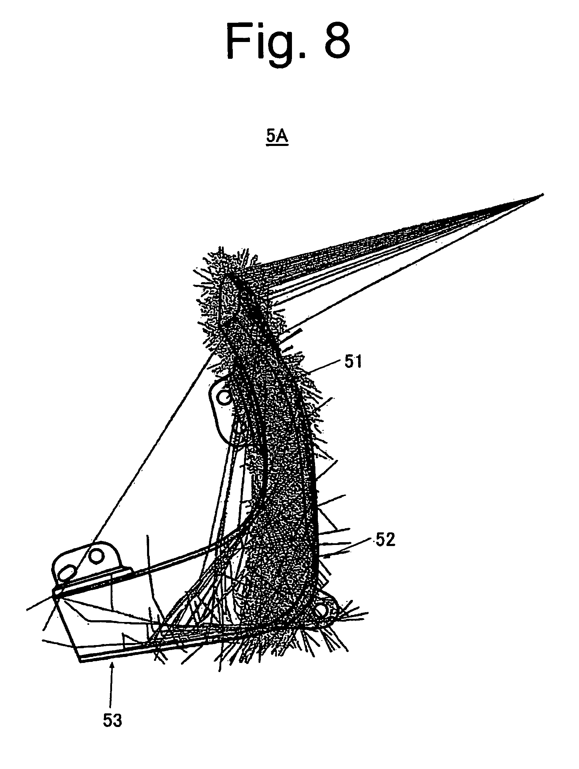

Fig. 7 is a simulation diagram showing the results of ray tracing performed on the light guiding lens 5 of the present exemplary embodiment. Fig. 8 is a simulation diagram showing the results of ray tracing performed on a comparative example of a light guiding lens 5A without cut surfaces 522 formed thereon. The light guiding lens 5A is the same as the light guiding lens 5 except that the cut surfaces 522 are not formed therein. In the drawings, the lines other than the lines for forming the shape of the light guiding lens 5 or 5A are the lines representing simulated travelling light rays.

When comparing the simulation results in Fig. 7 with those in Fig. 8, it is revealed that the light guiding lens 5 of the present exemplary embodiment can guide the entering light beams to the tip end of the extension section 53 better than the comparative exemplary light guiding lens 5A.

As discussed above, the present exemplary embodiment can be configured to form the cut surfaces 522 on the outer peripheral surface of the curved section 522 so as to reflect light beams reflected by the light guiding reflecting surface 512 toward the extension section 53 by internal reflection. Accordingly, the light beams passing out can be reflected by the cut surfaces 522 toward the extension section 53. This can increase the light amount to be transmitted to the tip portion of the extension section farther than the curved section. Furthermore, this can enhance the design degree of freedom.

In the above-described light guiding lens, the cut surfaces 522 can extend along a thickness direction of the curved section 52. Furthermore, the plurality of cut surfaces 522 can be formed along the peripheral direction of the curved section 52. The formed cut surfaces 522 is set in accordance with the radius of curvature of the curved section 52. This configuration can effectively reflect light beams entering there toward the extension section 53.

## Claims

1. A light guiding lens (5) for guiding a light beam other than light beams from a light source (3) for forming a predetermined light distribution pattern, with the light guiding lens (5) being disposed at an area out of an optical path for the light beams for forming a predetermined light distribution pattern, the light guiding lens (5) comprising:
a lens main body (51) extending in a vertical direction;
a curved section (52) configured to be curved away from an optical axis of the light source (3) with respect to the lens main body (51); and
an extension section (53) configured to extend from a distal end of the curved section (52) in a direction substantially perpendicular to an extending direction of the lens main body (51), wherein
the lens main body (51) has a light incident surface (511) on which the light beams out of the optical path can be incident and a reflecting inner surface (512) configured to reflect the light beams entering the lens main body (51) through the light incident surface (511) toward the curved section (52) by internal reflection, and
at least one cut surface (522) is formed on an outer peripheral surface of the curved section (52) with the cut surface (522) being capable of reflecting the light beams reflected by the reflecting inner surface (512) toward the extension section (53) by internal reflection,
**characterized in that**
the cut surface (522) extends along a thickness direction of the curved section (52), and is composed of a plurality of cut surfaces (522) arranged along the peripheral direction of the curved section (52) with the formed cut surfaces (522) being set in accordance with a radius of curvature of the curved section (52).

2. A vehicle light (1) comprising:
a light source (3); and
a light guiding lens (5) according to claim 1.

3. The vehicle light (1) according to claim 2, **characterized in that** the vehicle light (1) is any one of a vehicle headlight, a vehicle fog lamp, a vehicle auxiliary headlight, a signal light, a turning light, and a tail light.

## Patentansprüche

1. Lichtführungslinse (5) zum Führen eines anderen Lichtstrahls als den Lichtstrahlen von einer Lichtquelle (3) zur Bildung eines vorbestimmten Lichtverteilungsmusters, wobei die Lichtführungslinse (5) in einem Bereich außerhalb eines optischen Pfades der Lichtstrahlen zur Bildung eines vorbestimmten Lichtverteilungsmusters angeordnet ist, wobei die Lichtführungslinse (5) Folgendes aufweist:
einen Linsenhauptkörper (51), der sich in einer Vertikalrichtung erstreckt;
einen gekrümmten Abschnitt (52), der derart konfiguriert ist, dass er sich von einer optischen Achse der Lichtquelle (3) bezüglich des Linsenhauptkörpers (51) wegkrümmt; und
einem Verlängerungsabschnitt (53), der konfiguriert ist sich von einem distalen Ende des gekrümmten Abschnitts (52) in einer Richtung im Wesentlichen senkrecht zu einer Erstreckungsrichtung des Linsenhauptkörpers (51) zu erstrecken, wobei
der Linsenhauptkörper (51) eine Lichteinfallsfläche (511) besitzt, auf die Lichtstrahlen außerhalb des optischen Pfades einfallen können, und eine reflektierende Innenfläche (512), die konfiguriert ist zum Reflektieren der Lichtstrahlen, die in den Linsenhauptkörper (51) einfallen durch die Lichteinfallsfläche (511) zu dem gekrümmten Abschnitt (52) durch interne Reflektion zu reflektieren, und
wenigstens eine geschnittene Fläche (522) an einer Außenumfangsfläche des gekrümmten Abschnitts (52) ausgebildet ist, wobei die geschnittene Fläche (522) in der Lage ist, die Lichtstrahlen, welche durch die reflektierende Innenfläche (512) reflektiert wurden zu dem Verlängerungsabschnitt (53) durch interne Reflektion zu reflektieren,
**dadurch gekennzeichnet, dass**
die geschnittene Fläche (522) sich entlang einer dicken Richtung des gekrümmten Abschnitts (52) erstreckt, und aus einer Vielzahl von geschnittenen Flächen (522) aufgebaut ist, die entlang der Umfangsrichtung des gekrümmten Abschnitts (52) angeordnet sind, wobei die ausgebildeten geschnittenen Flächen (522) gemäß einem Krümmungsradius des gekrümmten Abschnitts (52) eingestellt sind.

2. Fahrzeuglicht (1), das folgendes aufweist:
eine Lichtquelle (3); und
eine Lichtführungslinse (5) nach Anspruch 1.

3. Fahrzeuglicht (1) nach Anspruch 2, **dadurch gekennzeichnet, dass** das Fahrzeuglicht eines der folgenden ist: ein Fahrzeugscheinwerfer, ein Fahrzeugnebellicht, ein Zusatzscheinwerfer, ein Signallicht, ein Blinklicht und ein Rücklicht.

## Revendications

1. Lentille de guidage de lumière (5) pour guider un rayon lumineux autre que des rayons lumineux provenant d'une source de lumière (3) pour former un motif de distribution lumineuse prédéterminé, la lentille de guidage de lumière (5) étant disposée dans une région située en dehors d'un trajet optique pour les rayons lumineux destinés à former un motif de distribution lumineuse prédéterminé, la lentille de guidage de lumière (5) comprenant :
un corps principal de lentille (51) s'étendant dans une direction verticale ;
une section courbe (52) agencée pour être courbée en s'éloignant de l'axe optique de la source de lumière (3) par rapport au corps principal de lentille (51) ; et
une section d'extension (53) agencée pour s'étendre à partir d'une extrémité distale de la section courbe (52) dans une direction sensiblement perpendiculaire à la direction dans laquelle s'étend le corps principal de lentille (51), dans laquelle
le corps principal de lentille (51) a une surface d'incidence de lumière (511) sur laquelle les rayons lumineux en dehors du trajet optique peuvent être incidents et une surface intérieure réfléchissante (512) agencée pour réfléchir les rayons lumineux entrant dans le corps principal de lentille (51) à travers la surface d'incidence de lumière (511) vers la section courbe (52) par réflexion interne, et
au moins une surface à pans coupés (522) est formée sur une surface périphérique extérieure de la section courbe (52), la surface à pans coupés (522) pouvant réfléchir les rayons lumineux réfléchis par la surface intérieure réfléchissante (512) vers la section d'extension (53) par réflexion interne,
**caractérisé en ce que**
la surface à pans coupés (522) s'étend suivant une direction d'épaisseur de la section courbe (52), et est composée d'une pluralité de surfaces à pans coupés (522) agencées suivant la direction périphérique de la section courbe (52), les surfaces à pans coupés formées (522) étant disposées selon un rayon de courbure de la section courbe (52).

2. Feu de véhicule (1) comprenant :
une source de lumière (3) ; et
une lentille de guidage lumière (5) selon la revendication 1.

3. Feu de véhicule (1) selon la revendication 2, **caractérisé en ce que** le feu de véhicule (1) est l'un quelconque des feux suivants : un phare de véhicule, un feu de brouillard de véhicule, un phare auxiliaire de véhicule, un feu de signalisation, un feu clignotant et un feu arrière.
